# EUROPEAN PATENT APPLICATION

(11) **EP 1 796 057 A1**
(43) Date of publication of application: **13.06.2007**
(21) Application number: 05425882.7
(22) Date of filing: 12.12.2005
(51) Int. Cl.: G08G 1/0968, G01C 21/36

(54) **Driving aid system for vehicles**

(71) Applicant: C.R.F. SOCIETA' CONSORTILE PER AZIONI, 10043 Orbassano (Torino) (IT)
(72) Inventor: Savio, Walter c/o C.R.F. Società Consortile per Azioni, 10043 Orbassano (IT)
(74) Representative: Cerbaro, Elena

(57) **Abstract**

Described herein is a driving aid system (2) for a vehicle (1), comprising: a device (3) for location of the vehicle (1); an electronic processing unit (5) designed to store information indicating potentially dangerous areas for driving safety, and co-operating with the location device (3) to determine the passage of the vehicle (1) through the said potentially dangerous areas; and a signalling device (4) co-operating with the electronic processing unit (6) to warn the occupants of the vehicle (1) of the passage of the vehicle (1) itself through said potentially dangerous areas. In particular, the information indicating the aforesaid potentially dangerous areas are stored in the form of coordinates of points of entry into/exit from the potentially dangerous areas, and the electronic processing unit (5) is designed to determine the passage of the vehicle (1) through the aforesaid potentially dangerous areas on the basis of the comparison of the position of the vehicle (1) with the coordinates of the points of entry/exit.

## Description

The present invention relates to a driving aid system for vehicles and, in particular, to an informative driving aid system.

As is known, informative driving aid systems have the main function of supplying the driver of the vehicle with a set of information of a graphic and/or vocal nature on the stretch of road covered or to be covered so as to enable him to reach the pre-set destination in the best way possible.

The most widespread driving aid systems are satellite navigation systems, which, as is known, have the main function of supplying the driver of the vehicle with a set of visual information of a cartographic nature for the purpose of guiding him towards a pre-set destination.

Said navigation systems are basically constituted by a satellite positioning system, for example of a GPS (Global Positioning System) type for determination of the current position of the vehicle, and by a processing unit, which, on the basis of information of a cartographic nature stored therein, calculates the paths to follow according to the current position of the vehicle and the cartographic information stored.

In addition to satellite navigation systems of a traditional type, there are moreover known navigation systems of a "dynamic" type, namely, ones not limited to supplying the driver of the vehicle with a set of instructions on how to reach the pre-set destination, but also able to supply the driver with additional information, such as for example information on the traffic or on points of particular interest or usefulness or of particular danger along the route covered.

The above-mentioned additional information can be stored directly in the on-board navigation system or else be transmitted to the on-board navigation system by an operating centre in communication with the vehicle.

The aim of the present invention is to provide a system that will enable supplying the driver, in a simple and economically advantageous way, with an aid to driving in areas potentially dangerous for driving safety, without requiring the use of a costly satellite navigation system based upon maps.

Provided according to the present invention are a driving aid system, as defined in Claim 1, and a vehicle equipped with said aid-to-driving system, as defined in Claim 10.

For a better understanding of the present invention, there is now described a preferred embodiment, purely by way of nonlimiting example, with reference to the attached plate of drawings, wherein:
- Figure 1 shows the block diagram of a driving aid system according to one embodiment of the present invention; and
- Figure 2 shows a flowchart regarding the operations implemented by the driving aid system of Figure 1.

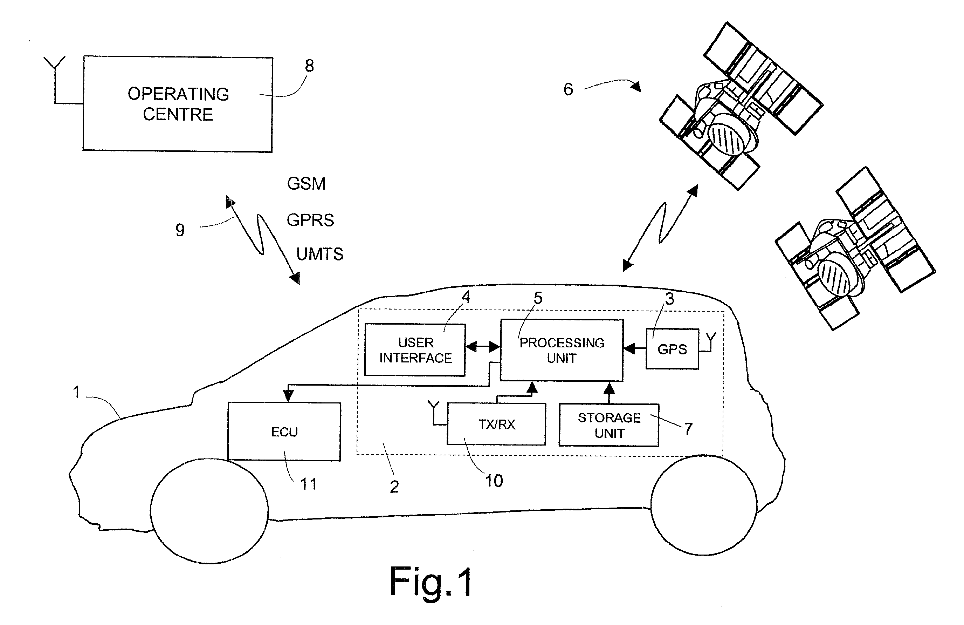

Illustrated and designated as a whole by the reference number 1 in Figure 1 is a vehicle, in particular a road vehicle such as a motor vehicle, on which a driving aid system 2 designed according to one embodiment of the present invention is installed.

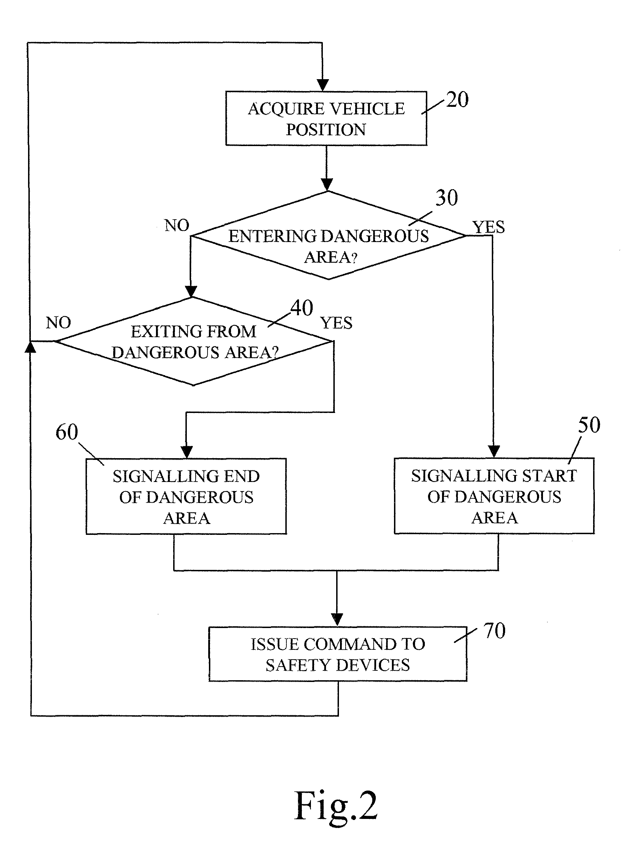

The driving aid system 2 comprises a satellite location device 3 to determine the absolute position of the motor vehicle 1 on the surface of the Earth, a user interface 4 to enable the driver or the passengers to manage the functions of the driving aid system 2 and to warn the driver of the passage of the motor vehicle through an area that is potentially dangerous for driving safety, and an electronic computing unit 5, connected to the satellite location device 3 and to the user interface 4 and implementing the operations described hereinafter with reference to the flowchart of Figure 2.

The satellite location device 3 co-operates, in a way in itself known, with a satellite location system (GPS) 6, formed by a plurality of satellites set in orbit around the Earth, distributed on six different orbital planes, and designed to produce radio signals that, once received by the satellite location device 3, enable the latter to determine its own absolute position on the surface of the Earth through a calculation of geometrical triangulation based upon its own distance with respect to at least four satellites.

The electronic processing unit 5 is provided with a storage unit 7 (illustrated outside the electronic processing unit 5 for simplicity of illustration), in which information of a geographical nature is stored indicating potentially dangerous areas for driving safety, such as, for example, tunnels, stretches of road with bends and/or steep slopes, or stretches of road that are frequently exposed to strong winds.

According to one aspect of the present invention, said information is stored in the storage unit 7 not in the form of cartographic maps, as in the known art, but rather much more simply, exclusively in the form of position of geo-referenced points, i.e., of co-ordinates (for example, longitude and latitude) of the position of said points. For each point, moreover, additional information of a static type is stored, such as, for example, whether it is a point of entry into the dangerous area, a point of exit from the dangerous area, or a bidirectional point, i.e., it can be traversed both at entry into and at exit from the dangerous area.

The positions of the points of entry into and/or exit from the dangerous areas can be loaded into the storage unit 7 or directly, for example via an external programming device or else via data media of a known type, such as, for example, CD-ROMs, DVDs, or storage devices equipped with a USB connector, or else be transmitted from a remote operating centre 8 through a mobile communication network 9 of a known type, for example GSM, GPRS or UMTS. In this embodiment, the driving aid system2 will moreover be provided with an appropriate transceiver unit 10, through which a request for updating may be sent and the updated information may be received.

According to what is illustrated in Figure 2, in use the electronic processing unit 5 acquires the position of the motor vehicle supplied by the satellite location device 3 (block 20) continuously and compares it with the positions of the points stored in the storage unit 7 (block 30). At the moment in which the electronic processing unit 5 verifies that the position of the motor vehicle 1 is sufficiently close to the position of one of the points stored and hence that the motor vehicle is entering or leaving a potentially dangerous area (output YES from blocks 30 and 40), this sends a command to the user interface 4 so that the latter warns the driver of the motor vehicle of said situation (blocks 50 and 60).

In particular, the electronic processing unit 5 could for example be configured in such a way that the user interface 4 will supply the driver of the motor vehicle 1 with:
- an acoustic and/or visual message whenever the motor vehicle 1 enters/leaves a potentially dangerous area; and
- if available, additional information, such as telephone numbers or addresses, regarding the breakdown and assistance centres closest to the area of potential danger in which the vehicle is located, or indications on how to reach possible call boxes from which to make emergency calls.

In addition, the electronic processing unit 5 could be configured in such a way as to send to the operating centre 8 a message containing the co-ordinates of the point of entry or exit through which the motor vehicle 1 has travelled, so as to enable the operating centre 8 to monitor the position of the motor vehicle 1 constantly so as to be able to intervene in due time in the case where a situation of emergency arises.

In addition, in the case where the motor vehicle 1 is of the type provided with electronically controlled safety devices controlled by a purposely provided electronic control unit, designated in Figure 1 by the number 11, for example an ABS braking device, an ESP device for control of stability, a device for automatic control of the speed of the motor vehicle and of the distance of the motor vehicle from a vehicle preceding it (Adaptive Cruise Control), or a door-locking device, the electronic processing unit 5 could moreover be configured for controlling, through the electronic control unit 11, the safety devices of the motor vehicle according to the physical characteristics of the potentially dangerous area traversed by the motor vehicle 1. In particular, it could be configured for modifying appropriately the operating parameters of said safety devices so as to improve their efficiency according to the situation of potential danger (block 70). In this embodiment, for each point there must then be stored in the storage unit 7 further information of a static nature indicating the physical characteristics of the point itself, for example if the point is located in a stretch of road with a steep slope, or else in a stretch of road with a lot of bends, or else in a stretch of road that is particularly slippery, etc., on the basis of which the electronic control unit 12 can determine the most appropriate values of the operating parameters of said safety devices.

From an examination of the characteristics of the driving aid system1 according to the present invention, the advantages that it makes available emerge clearly.

In particular, the main advantage of the driving aid systemforming the subject of the present invention is that of being simple and inexpensive in so far as it does not require the use of a costly satellite navigation system based upon maps, thus being installable at any moment, and hence even after its purchase, on any type of motor vehicle.

Furthermore, even though it is considerably simpler than the known systems, the driving aid system according to the present invention enables the same level of safety to be substantially achieved thanks to the continuous warning of the possible dangers deriving from the characteristics of the stretch of road covered and to the adaptation of the parameters of the safety systems of the vehicle to the characteristics of the stretches of road.

Finally, it is clear that modifications and variations can be made to the driving aid system1 described and illustrated herein, without thereby departing from the sphere of protection of the present invention, as defined in the annexed claims.

For example, the functions performed by the electronic processing unit 5 could be performed by the electronic control unit 11.

## Claims

1. A driving aid system(2) for a vehicle (1), comprising:
• means (3) for location of said vehicle (1);
• processing means (5) configured for storing information indicating potentially dangerous areas for driving safety, and co-operating with said location means (3) to determine the passage of said vehicle (1) through said potentially dangerous areas for driving safety; and
• signalling means (4) co-operating with said processing means (5) to warn the occupants of said vehicle (1) of the passage of the vehicle (1) itself through said potentially dangerous areas for driving safety;
said system being **characterized in that** said information indicating said potentially dangerous areas for driving safety are stored in the form of co-ordinates of points of entry into/exit from said potentially dangerous areas;
and **in that** said processing means (5) are configured to determine the passage of said vehicle (1) through said potentially dangerous areas on the basis of the comparison of the position of said vehicle (1) with said stored co-ordinates.

2. The system according to Claim 1, moreover comprising:
• means of communication (10) co-operating with said processing means (5) and configured for receiving from a remote operating centre (8) said co-ordinates of said points of entry into/exit from said potentially dangerous areas.

3. The system according to Claim 2, in which said means of communication (10) are moreover configured for sending to said remote operating centre (8) a request for sending said co-ordinates of said points of entry into/exit from said potentially dangerous areas.

4. The system according to Claim 2 or Claim 3, in which said means of communication (10) are moreover configured for sending a message to said remote operating centre (8) when said vehicle passes through said points of entry into/exit from said potentially dangerous areas.

5. The system according to any one of the preceding claims, in which said signalling means (4) are configured to warn the occupants of said vehicle (1) of the passage of the vehicle
(1) itself through said points of entry into/exit from said potentially dangerous areas.

6. The system according to any one of the preceding claims, in which said signalling means (4) are moreover configured for supplying the occupants of said vehicle (1) with additional information, such as telephone numbers or addresses regarding breakdown and assistance centres in the vicinity of said potentially dangerous areas.

7. The system according to any one of the preceding claims, for a vehicle (1) provided with electronically controlled safety devices, in which said processing means (5) are moreover configured for storing information indicating the physical characteristics of said points of entry into/exit from said potentially dangerous areas, and for modifying operating parameters of said electronically controlled safety devices in positions corresponding to said points of entry /exit according to the physical characteristics thereof.

8. The system according to any one of the preceding claims, in which said signalling means (4) are of an acoustic and/or visual type.

9. The system according to any one of the preceding claims, in which said signalling means (4) are configured for enabling management of the functions of said driving aid system(2).

10. A vehicle (1) comprising an driving aid system(2) according to any one of the preceding claims.
